# EUROPÄISCHE PATENTSCHRIFT

(11) **EP 2 406 139 B1**
(45) Veröffentlichungstag und Bekanntmachung des Hinweises auf die Patenterteilung: **29.04.2015**
(21) Anmeldenummer: 10706672.2
(22) Anmeldetag: 05.03.2010
(51) Int. Cl.: B65B 25/06, B65B 35/50, B65G 47/30, B65G 57/28, B65B 35/44, B65B 35/24

(54) **VERFAHREN UND VORRICHTUNG ZUM ERZEUGEN FORMATIERTER GESAMTPACKUNGEN**
METHOD AND APPARATUS FOR CREATING FORMATTED PACKAGES
PROCEDE ET APPAREIL DE CREATION DES FORMATED EMBALLAGES

(30) Priorität: 10.03.2009 DE 102009011936; 04.05.2009 DE 102009019462
(43) Veröffentlichungstag der Anmeldung: 18.01.2012
(73) Patentinhaber: Hochland SE, 88178 Heimenkirch (DE)
(72) Erfinder: BIGGEL, Andreas, 88145 Hergatz (DE); HOFER, Stefan, 88316 Isny (DE)
(74) Vertreter: Braun-Dullaeus, Karl-Ulrich
(86) Internationale Anmeldenummer: PCT/EP2010/052868
(87) Internationale Veröffentlichungsnummer: WO 2010/102963

(56) Entgegenhaltungen:
- EP-A1- 1 270 459
- DE-C1- 3 819 348

## Beschreibung

Die Erfindung betrifft ein Verfahren zum Erzeugen formatierter Gesamtpacken enthaltend eine definierte Anzahl aneinanderliegender gleichformatiger insbesondere von einem Lebensmittelprodukt gebildeter Einzelstücke, wobei die Einzelstücke, die ihrerseits von Einzelstapeln gebildet sein können, auf Förderbändern aufliegend entlang von Förderstrecken transportiert werden. Die Erfindung betrifft zudem eine Vorrichtung zur Umsetzung des Verfahrens.

Die Erzeugung solcher formatierter Gesamtpacken ist beispielsweise aus der Schmelzkäseverarbeitung bekannt. So werden Käsescheiben für Großabnehmer unmittelbar in Produktstapeln übereinander gelegt und insbesondere in mehrere Produktstapel enthaltenden Gesamtpacken verpackt. Zur Vereinfachung des Herausnehmens einzelner Scheiben werden diese mitunter etwas versetzt in den Produktstapeln gestapelt, so dass das Ergreifen erleichtert wird. Ein Nachteil der bekannten Verfahren liegt in der fehlenden Flexibilität bezüglich der Höhe der Produktstapel, respektive der die Produktstapel bildenden Einzelstapel, und damit der aus ihnen zusammengesetzten Gesamtpacken. So ist die Höhe der Einzelstapel, insbesondere die Anzahl der übereinander liegenden Scheiben, von der jeweiligen Anlage abhängig und kann nur mit vergleichsweise großem Aufwand verändert werden.

Ganz generell sind in der Lebensmittelverarbeitung die strengen Vorschriften an die Hygiene einzuhalten. Darüber hinaus ist die Verarbeitung so durchzuführen, dass es nicht zu Beeinträchtigungen oder Beschädigungen des Produktes kommt.

Die DE 38 19 348 C1 offenbart eine Fördervorrichtung für Süßwarenstücke. Diese umfasst ein erstes und ein zweites, mit unterschiedlichen Geschwindigkeiten angetriebenes Förderband. Die Süßwaren werden von dem ersten Förderband auf das zweite Förderband übergeben, wobei die Reihen der Süßwaren auf dem zweiten Förderband mit einem größeren Abstand zueinander angeordnet als auf dem ersten Förderband. Hierin wird aber keine Möglichkeit offenbart, wie ein formatierter Gesamtpacken aus einer definierten Anzahl aneinanderliegender Einzelstücke erzeugt werden kann.

Aus der EP 1 270 459 A1 ist eine ähnliche Vorrichtung offenbart, die ebenfalls zwei angetriebene Förderbänder aufweist. Mittels eines variablen Übergangs von einem Förderband auf das andere Förderband kann der Abstand der angelieferten Produkte vereinheitlicht werden. Aufgabe der vorliegenden Erfindung ist es daher, ein mit technisch einfachen Mitteln zu realisierendes Verfahren und eine entsprechende Vorrichtung vorzuschlagen, die es in hygienischer und schonender Bearbeitung ermöglicht, Gesamtpacken aneinanderliegender gleichformatiger Einzelstücke, insbesondere Produktstapel eines in Scheiben vorliegenden Lebensmittels, wie unverpackte Schmelzkäsescheiben, in einstellbarem Format in großer Menge und hoher Geschwindigkeit herzustellen.

Diese Aufgaben werden durch das Verfahren mit den kennzeichnenden Merkmalen des Anspruch 1 und durch die Vorrichtung nach Anspruch 10 gelöst. Besondere Ausführungsformen sind in den jeweiligen Unteransprüchen genannt.

Dabei liegt der Erfindung zunächst der wesentliche Gedanke zu Grunde, die Einzelstücke, insbesondere die Produktstapel, nacheinander auf mindestens zwei unterschiedlichen Förderstrecken, die insbesondere von Förderbändern gebildet werden, zu befördern. Dabei hat jede der Förderstrecken eine besondere Funktionalität im Hinblick auf die Formatierung der Gesamtpacken. Erfindungsgemäß werden die Einzelstücke zunächst auf einer ersten Förderstrecke mit jeweiligem Abstand und mit einer Geschwindigkeit v_{B1} einer sich mit einer Geschwindigkeit v_{B2} bewegenden zweiten Förderstrecke zugeführt, die eine Pufferstrecke ausbildet und sich der ersten Förderstrecke in Transportrichtung unmittelbar anschließt. Am Beginn der zweiten Förderstrecke werden die Einzelstücke zu einem Pufferstapel aneinanderliegender Einzelstücke aufgestaut, wobei der Pufferstapel mit der Geschwindigkeit v_{B2}, die kleiner als v_{B1} ist, auf der zweiten Förderstrecke befördert wird. Dabei kann die Geschwindigkeit v_{B2} so eingestellt werden, dass der Abstand zwischen den Einzelstücken aufgehoben wird. Besonders vorteilhaft ist der Einsatz des Verfahrens, wenn die Einzelstücke jeweils Einzelstapel eines in Scheiben vorliegenden Lebensmittels, insbesondere unverpackte Schmelzkäsescheiben, sind.

Bei der Übergabe von einer Transportstrecke zur nächsten tritt das Problem auf, dass die Einzelstücke in Transportrichtung "vorne" durch die Auflage auf dem zweiten Förderband abgebremst werden und dabei "hinten" noch die höhere Geschwindigkeit des ersten Förderbandes haben. Es kommt somit zu einer Stauchung im Material, die, wenn es sich um ein Lebensmittel, wie insbesondere Käse, handelt, zu einer Beeinträchtigung des Produktes führt. Um dieses Problem zu beseitigen ist es ein weiterer wesentlicher Gesichtspunkt der Erfindung, die zwischen den Förderstrecken befindlichen Übergänge entlang der Transportrichtung verschieblich zu gestalten. Diese Idee, die sich bei jeglichen Übergängen von Förderstrecken umsetzen lässt, wo solche Probleme auftreten können, lässt sich besonders vorteilhaft umsetzen, wenn die Förderstrecken von Förderbändern gebildet werden, die am Übergang durch eine Walze umgelenkt werden. Wenn nun die am Übergang einander gegenüberstehenden Umlenkwalze während der Übergabe beide entgegen der Transportrichtung verschoben werden, so legt sich das langsamere Förderband von unten an das Einzelstück in einer Relativbewegung an die Unterseite an, während das schnellere Förderband den Kontakt zur Unterseite verliert. Je zügiger das schnellere Förderband unter dem Einzelstück, insbesondere dem Produktstapel, heraus gezogen wird, desto schonender ist die Übergabe. Durch die Verschiebung der Übergänge ändert sich die Fördergeschwindigkeit der Förderstrecken nicht, so dass keine weiteren Beschleunigungen außer der durch die unterschiedlichen Bandgeschwindigkeiten verursachten Geschwindigkeitsänderung auftreten.

Wenn ein Einzelstück an den Übergang heranläuft, verschiebt sich der Übergang entgegen der Transportrichtung, so dass das Einzelstück vollständig auf dem nachfolgenden Förderband aufgenommen wird. Nachdem das Einzelstück den Übergang passiert hat, verschiebt sich der Übergang mit der Geschwindigkeit v_{B2} in Transportrichtung, so dass der Abstand zwischen dem Einzelstück und dem Übergang konstant bleibt. Ein auf der ersten Förderstrecke mit der Geschwindigkeit v_{B1} transportiertes nachfolgendes Einzelstück nähert sich mit einer Relativgeschwindigkeit v_{R} = v_{B1}-v_{B2} dem verschieblichen Übergang und damit auch dem vorangegangenen Einzelstück. Mit Erreichen des verschieblichen Übergangs beginnt ein neuer Übergabezyklus, wobei sich das nachfolgende Einzelstück an das vorangegangene Einzelstück anlegt.

Am Ende der zweiten Förderstrecke werden die Gesamtpacken in einstellbarer Länge vom Pufferstapel abgelöst. Dabei geschieht das Ablösen vermittels einer dritten abführenden Förderstrecke, deren Geschwindigkeit v_{B4} während des Ablösens größer als v_{B2} ist. Vorteilhafterweise sollte die Geschwindigkeit v_{B4} während der Übergabe des definierten Gesamtpackens gleich der Geschwindigkeit v_{B2} sein, um Stauchungen im Material zu verhindern.

Der Übergang zu dieser dritten Förderstrecke sollte erfindungsgemäß verschieblich gestaltet werden. In diesem Fall kann das die dritte Förderstrecke bildende Förderband mit einer Bewegung unter den Pufferstapel verlängert werden, bis der Pufferstapel über die Länge des definierten Gesamtpackens vollständig auf der dritten Förderstrecke aufliegt. Vorzugsweise ist die Geschwindigkeit der Verschiebung des Übergangs möglichst hoch, um die Trennung der einzelnen aneinander liegenden Einzelstücke zu verhindern und die Streckung im Produkt so klein wie möglich zu halten. Je nachdem, bis wohin der Übergang verschoben wird, kann somit ein Gesamtpacken beliebig definierter Länge auf schonende Art vom Pufferstapel abgelöst werden.

Sobald der Übergang das Ende des Gesamtpackens definierter Länge erreicht hat, also der Gesamtpacken definierter Länge auf der dritten Förderstrecke aufliegt, wird der Ablösevorgang durch eine Erhöhung der Geschwindigkeit v_{B4} der dritten Förderstrecke ausgelöst, wodurch sich der definierte Gesamtpacken vom Pufferstapel löst. Gleichzeitig verschiebt sich der Übergang mit einer Geschwindigkeit, die innerhalb des Differenzbereichs von v_{B4} und v_{B2} während des Ablösevorgangs liegt, wieder zurück in Transportrichtung, vorzugsweise zurück in eine Ausgangsposition, worauf ein neuer Ablösezyklus beginnen kann.

Falls die Einzelstücke aus Einzelstapeln gebildet sein sollen, kann deren Stapelung mittels zweier vorgeschalteter Stapelräder geschehen, wobei das erste Stapelrad in einem kontinuierlichen Prozess die Einzelstapel aufrichtet, während das zweite taktweise angesteuert wird. Diese Art der Stapelung ist an sich von der weiteren Verarbeitung unabhängig. Vorteilhafterweise sind der Stapelung jedoch die erfindungsgemäßen Förderstrecken nachgeschaltet, wobei der erste verschiebliche Übergang zwischen der ersten und der zweiten Förderstrecke der Pufferbildung dient, während der zweite verschiebliche Übergang die Gesamtpackenbildung bewirkt.

Die Funktion der Transportbänder ermöglicht ein takt- und raportgenaues Zuführen der definierten Gesamtpacken in eine nachgeschaltete Verpackungsmaschine. Damit ist die Stapelung äußerst druck- u. reibungsempfindlicher Gegenstände mit anschließender Gesamtpackenbildung (Gruppierung) möglich. Mit der Erfindung sind hohe Taktraten möglich. Weitere Vorteile liegen in der variablen Formatbildung, der Pufferfunktion und der Verarbeitbarkeit von Einzelstapeln mit variierenden Abmessungen ohne dass mechanische Umbauten an der Anlage nötig wären. Zudem ergibt sich eine nur minimale Relativbewegung zwischen dem transportieren Gegenstand und den Transportbändern, so dass im Fall von Käsescheiben der Abrieb reduziert und die Hygiene verbessert wird.

Besonders vorteilhaft werden vier Förderbänder mit jeweils längenverstellbarer Förderstrecke eingesetzt. Die Anlage zur Mehrfachstapelbildung besitzt in diesem Fall vier in Reihe angeordnete Förderbänder B1-B4, wobei jeweils die Umlenkwalze eines Förderband-Endes mit der Umlenkwalze des folgenden Förderbandanfangs bezüglich der Bandlänge fest oder verschieblich gekoppelt ist. Die einander gegenüberstehenden verschieblichen Umlenkwalzen der verschiedenen Förderstrecken bleiben somit in ihrer relative Position zueinander stets unverändert. Das Ende des Bands der ersten Förderstrecke ist verschieblich gekoppelt mit dem Anfang des einen Teil der zweiten Förderstrecke bildenden zweiten Bands. Das Ende des den anderen Teil der zweiten Förderstrecke bildenden dritten Bands ist gekoppelt mit dem Anfang des die dritten Förderstrecke bildenden vierten Bands. Die zu den gekoppelten Enden der jeweiligen Bänder entgegengesetzten Enden sind vorteilhafterweise nicht verstellbar. Jedes Förderband ist somit nur an einem Ende längenverstellbar, was eine insgesamt einfachere Steuerung ermöglicht. Zudem wird der Antrieb der Förderbänder wesentlich erleichtert, da die Kraftübertragung über, insbesondere mehrere, fixe Umlenkwalzen erfolgen kann.

An den Übergangsstellen der längenverstellbaren Förderbänder sowie am Anfang und am Ende der Anlage sind Fühlorgane in Form von Sensoren angeordnet. Diese ermöglichen die Überwachung der tatsächlich geförderten Anzahl von Gegenständen. Somit ist stets eine korrekte Gruppierung mit minimaler Relativbewegung zwischen Förderband und Gegenstand gewährleistet, selbst dann, wenn auf den Förderbändern vor der Pufferbildung Gegenstände entnommen oder hinzugefügt werden.

Die Vorrichtung ist in der Lage, für eine gewisse Zeitspanne permanent Einzelstücke auf Band B2 und B3 aufzunehmen, ohne welche über Band B4 abzugeben. Dies kann dann erforderlich sein, wenn von der nachgeschalteten Station auf Grund von Störungen keine Gegenstände übernommen werden können und gleichzeitig durch die vorgeschaltete Station weiterhin Gegenstände der Anlage zugeführt werden. In diesem Fall übernehmen die Bänder B2 und B3 eine Pufferfunktion.

Die erfindungsgemäße Stapelvorrichtung wird vorteilhafterweise zur Stapelung und Formatbildung von unverpackten Schmelzkäsescheiben verwendet. Offene Einzelstapel werden über ein Transportband mit bestimmter Geschwindigkeit und Taktrate der Stapelvorrichtung zugeführt. Im ersten Teil der Anlage werden aus den Einzelstapeln Produktstapel gebildet. Anschließend erfolgt die Anordnung der Produktstapel zu Gesamtpacken, die positionsgenau an eine Verpackungsmaschine übergeben werden können. Die Stapelvorrichtung ist so gestaltet, dass sowohl die Höhe der Mehrfachstapel als auch die Formatgröße per Eingabe an einem Bedienfeld und ohne Umbauten vorgegeben werden können. Die gesamte Bedienung kann von nur einem Bedienpanel erfolgen. Alle Störungen und/oder Meldungen können an dem Panel zur Anzeige gebracht werden.

Bei der Stapelung werden statt der bisherigen Stapelkreuze nunmehr Stapelräder verwendet, die mehrere Stapel gleichzeitig bewegen können, was eine erhöhte Taktrate ermöglicht. Vorteilhafterweise messen Sensoren Geschwindigkeit und Abstand der zugeführten Einzelstapel, so dass die Geschwindigkeit der Stapelung der Frequenz der den Stapler erreichenden Einzelstapel anpassbar ist. Besonders bevorzugt ist eine Anordnung von zwei in Reihe geschalteten Stapelräder, bei der die zugeführten Einzelstapel von der mindestens eines in Transportrichtung vorderen Stapelrads aufgerichtet, insbesondere um 90° gedreht, und darauf folgend einer der mindestens eines hinteren Stapelrads zugeordnete Anlagenfläche zugeführt wird. Liegt eine gewünschte Anzahl Einzelstapel an der Anlagefläche an, wird das nun gebildete Einzelstück definierter Größe von dem mindestens einen hinteren Stapelrad erneut, insbesondere um 90°, gedreht und der ersten Förderstrecke des Moduls zur Gesamtpackenbildung zugeführt.

Das Stapelmodul ist grundsätzlich dazu geeignet, mit hoher Geschwindigkeit aus einer beliebigen Anzahl von Einzelteilen zusammengesetzte Einzelstücke zu bilden. Seine Verwendung ist somit nicht nur auf diese Erfindung begrenzt, sonder kann auch losgelöst von der erfindungsgemäßen Gesamtpackenbildung zur Anwendung kommen.

Nachfolgend wird ein Ausführungsbeispiel der Erfindung anhand der Figuren 1 bis 4 näher erläutert. Es zeigen:
- **Figur 1:**: eine Stapelvorrichtung,
- **Figur 2:**: eine Detailansicht des Stapelmoduls,
- **Figur 3:**: das Modul zur Gesamtpackenbildung und
- **Figur 4:**: zwei parallele Stapelvorrichtungen.

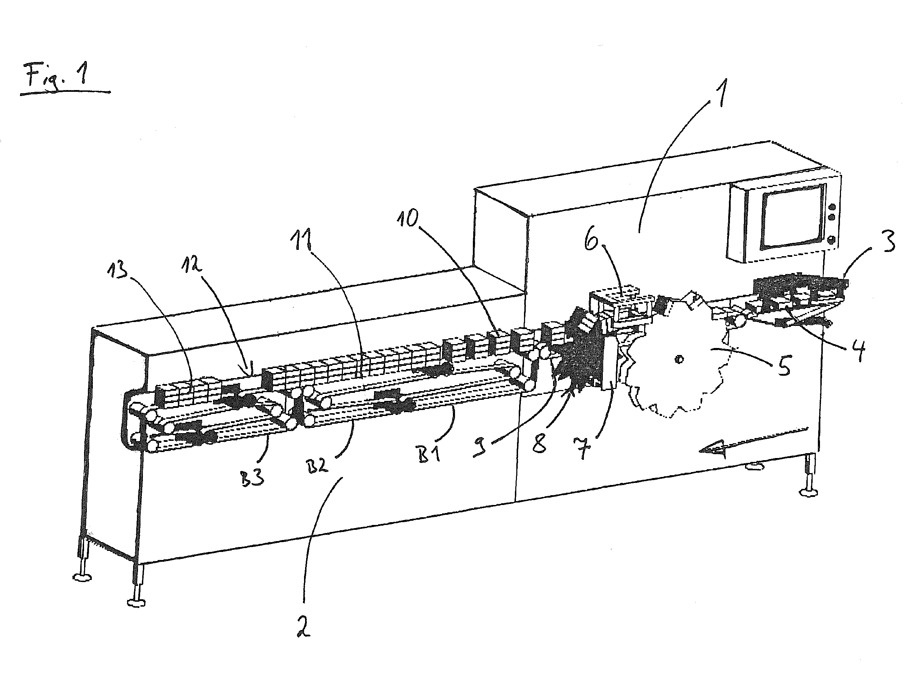

In Figur 1 ist eine komplette Stapelvorrichtung mit einem Modul 1 zur Stapelbildung und einem Modul 2 zur Gesamtpackenbildung gezeigt. Zu Beginn steht eine Ausrichtstation mit Abstandskontrolle 3, die liegende Einzelstapel 4 ausscheidet. In Transportrichtung (Pfeil A) folgt das Aufrichten der Einzelstapel 4 in einem ersten Stapelrad 5, die in einen ersten Puffer 6 stehend stapelt. Dieser bietet eine Seitenführung während der Mehrfachstapelung zum Produktstapel. Auf einem Band werden die stehenden aneinandergereihten Einzelstapel 4 einem Ausheber 7 zugeführt und einem zweiten Stapelrad 8 übergeben, welches sie auf ein Transportband 9 des Stapelmoduls 1 legt. Ein erstes Transportband B1 des Moduls 2 transportiert die ab hier mit Einzelstück 10 bezeichneten Produktstapel voneinander getrennt zu einem zweiten B2 und dritten B3 Transportband zur Pufferung 11 und dann zu einem vierten Transportband B4 zur Gesamtpackenbildung 12. Im gezeigten Fall entsteht ein Gesamtpacken 13 mit vier Produktstapeln ("Einzelstücken") 10.

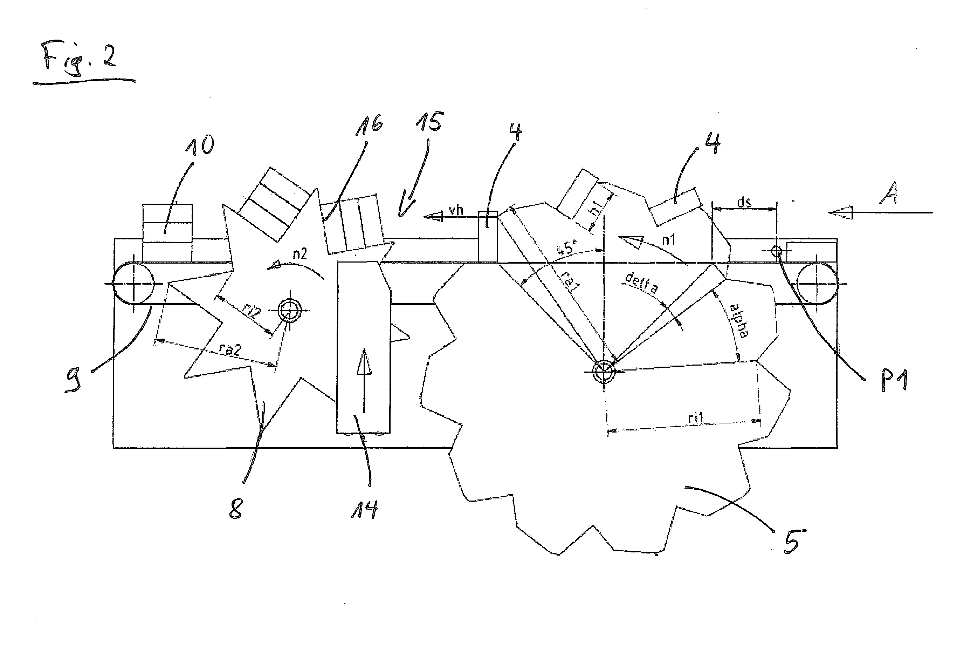

In Figur 2 ist eine Detailansicht des Stapelmoduls gezeigt, das in Transportrichtung (Pfeil A) mit einer Geschwindigkeit v_{B} beschickt wird. Diese hat einen ersten Positionssensor P1, der vor dem Stapelrad 5 zum Aufrichten der Einzelstapel 4 angeordnet ist. Das Stapelrad 5 läuft mit konstanter Drehzahl n₁. In der Detailansicht sind weitere Notationen enthalten. In Förderrichtung hinter dem Stapelrad 5 ist der pneumatisch betätigte Ausheber 14 zum Abheben der Einzelstapel 4 vom Transportband 9 während der Produktstapelbildung 15 gezeigt. Das die Produktstapel umdrehende Stapelrad 8 hat eine intermittierende Drehzahl n₂. Mit einer Drehbewegung nimmt es die in diesem Fall aus drei Einzelstapeln 4 bestehenden Produktstapel an eine Anlagefläche 16 auf. Im weiteren Verlauf der Drehbewegung legt es die Produktstapel zurück auf das Band 9 zum Weitertransport als Einzelstücke 10.

Der Begriff "Stapelrad" im Sinne dieser Anmeldung umschreibt insbesondere zwei das Transportband jeweils seitlich begrenzende parallel ausgerichtete und synchron laufende gleichgeformte Räder, die im Prinzip zahnradförmig ausgebildet sind und über entsprechend ausgebildete Anlage- und Auflageflächen für die Einzelstapel 4 bzw. Mehrfachstapel verfügen. Im Zuge der Drehbewegung wird die jeweilige Anlagefläche zur Auflagefläche.

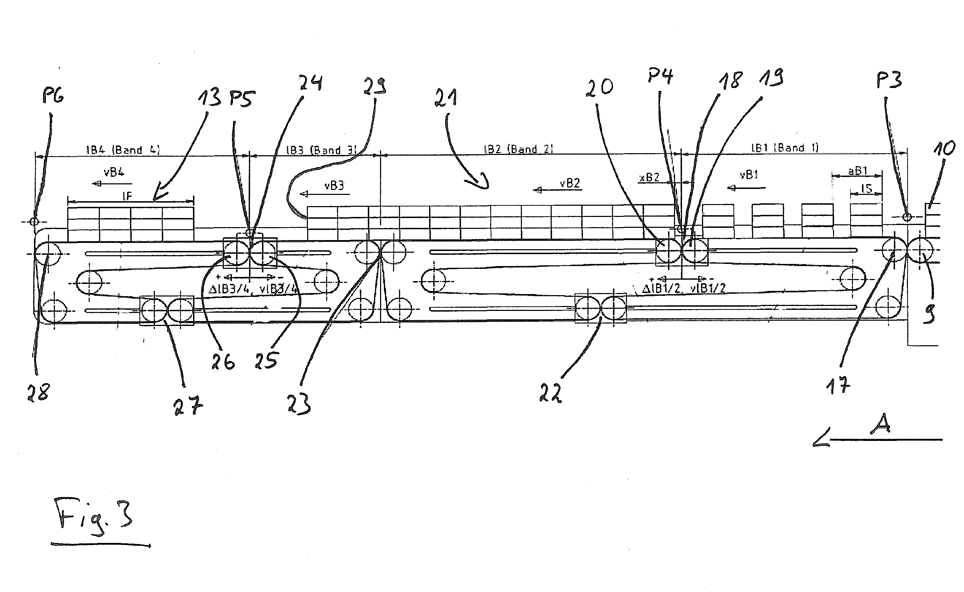

In Figur 3 ist das Modul 2 zur Gesamtpackenbildung mit später beschriebenen Notationen und vier Transportbändern B1-B4 gezeigt. Gerade noch zu erkennen ist das Ende des Bandes 9 (Figur 2), auf dem ein Einzelstück 10 zugeführt wird. Ein Positionssensor P3 überwacht den Eintritt auf ein erstes Band B1 mit fester Umlenkwalze 17. Ein wesentliches Merkmal ist der erste verschiebliche Übergang 18 in Form eines ersten elektromechanisch verschieblichen Verstellschlittens für eine Positionierung der Umlenkwalze 19 von Band B1 und der Umlenkwalze 20 von Band B2. Zudem trägt der Verstellschlitten 18 einen Positionssensor P4. Die Transportbänder B1 und B2 haben damit eine verstellbare Förderlänge und eine unterschiedliche Geschwindigkeit für die Bildung eines Pufferstapels 21 aus aneinandergereihten Einzelstücken 10. Ein unbetätigter Verstellschlitten 22 ist als Spannvorrichtung für die Bänder B1 und B2 vorgesehen.

Eine fixe Position 23 befindet sich am Ende von Band B2 und am Anfang von Band B3. Zudem ist ein den zweiten verschieblichen Übergang 24 bildender zweiter elektromechanisch verschieblicher Verstellschlitten 24 für eine Positionierung der Umlenkwalze 25 von Band B2 und der Umlenkwalze 26 von Band B3 vorgesehen. Dieser trägt auch den Positionssensor P5. Auch hier ist ein unbetätigter Verstellschlitten 27 als Spannvorrichtung für die Bänder B3 und B4 vorgesehen. Die Endrolle 28 von Band B4 ist fix. Das Ende der dritten Förderstrecke überwacht ein Positionssensor P6. Auf dem Band B4 befindet sich vor einem Positionssensor P6 ein vom Pufferstapel 21 abgetrennter definierter Gesamtpacken 13 mit einer Anzahl von vier aneinandergereihten Einzelstücken 10. Um eine exakte Bestimmung der Position der Einzelstücke 10, des Pufferstapels 21 und des Gesamtpackens 13 zu erleichtern, sind die Positionssensoren vorzugsweise mittig, also genau zwischen den beiden verschieblichen Umlenkwalzen, auf den Übergängen der einzelnen Förderstrecken positioniert.

Nachfolgend wird die Funktion des Stapelmoduls 1 beispielhaft beschrieben:
Vor Beginn einer Erstbeschickung mit Einzelstapeln 4 ist das Stapelmodul 1 vorzugsweise in einer Ausgangsstellung, in der die Bandgeschwindigkeit v_{BS} des ihn durchlaufenden Transportbands 9 mit der Bandgeschwindigkeit v_{B} der die Einzelstapel 4 anliefernden Transportstrecke übereinstimmt, so dass eine Stauchung der Einzelstapel 4 im Übergang von der Transportstrecke zu Transportband 9 vermieden werden kann. Das Stapelrad 5 befindet sich in einer Ruheposition, von der ein Ausgangswinkel d bekannt ist. Die dem zweiten Stapelrad 8 zugeordnete Anlagefläche 16 ist aufrecht zu dem Transportband 9 ausgerichtet, während der Ausheber 14 in seiner unteren Position ist.

Als Parameter können die Dicke der Einzelstapel und Anzahl der Einzelstapel pro Einzelstück eingestellt werden. Die Einstellungen des Stapelmoduls 1 wie auch des Gesamtpacken bildenden Moduls 2 werden über eine vorzugsweise gemeinsame zentrale Steuerung eingestellt und ausgelesen.

Für die Funktion des Aufrichtens der Einzelstapel 4 ist es wesentlich, dass der einlaufende Einzelstapel 4 eine Anlagefläche des Stapelrads 5, hier eine Anschlagkante, in dem Moment erreicht, wenn er durch eine Auflagefläche des Stapelrads 5, hier in Form einer Auflagekante ausgehoben wird. Beim Ausheben besitzt das Stapelrad 5 seine Nenndrehzahl n₁.

Danach beginnt die Synchronisierung der Drehzahl des Stapelrads 5 abhängig von Ausgangswinkel δ, der Bandgeschwindigkeit v_{BS} und einem bestimmten Abstand dₛ₁ für den nächsten einlaufenden Einzelstapel 4. Der Abstand dₛ₁ wird über den Positionssensor P1 bestimmt. Ein Nennabstand für den Abstand dₛ₁ ist per Offseteingabe veränderbar, um die Einzelstapel 4 entsprechend früher oder später ankommen zu lassen.

Da der Ausgangswinkel δ und die Bandgeschwindigkeit v_{BS} während der kontinuierlichen Produktion konstant sind, hängt die Synchronisierung vom Zeitpunkt ab, an dem der einlaufende Einzelstapel 4 den mit dₛ₁ beabstandeten Positionssensor P1 erreicht.

Durch den Positionssensor P1 wird die Lage des einlaufenden Einzelstapels 4 erkannt. Daraus ergibt sich der Abstand des Einzelstapel 4 zum Zeitpunkt des Synchronisationsbeginn. Entspricht der Abstand dem Nennabstand läuft das Stapelrad 5 konstant weiter, ein geringerer oder größerer Abstand wird durch Beschleunigung oder Verzögerung der Drehzahl des Stapelrads 5 ausgeglichen. Nach Abschluss der Synchronisierung wird der erste Einzelstapel 4 aufgenommen und der Stapelprozess wird mit konstanter Drehzahl n₁ an dem Stapelrad 5 zum kontinuierlichen Aufrichten der Einzelstapel 4 während der Produktion fortgeführt.

Sobald ein erster aufgerichteter Einzelstapel 4 einen nicht gezeigten Positionssensor P2 erreicht erfolgt die Ermittlung der Zeit bis der Einzelstapel 4 die dem Stapelrad 8 zugeordnete Anlagefläche 16 erreicht. Bestimmende Parameter sind hier die Bandgeschwindigkeit v_{BS} und der durch den zweiten Positionssensor P2 bestimmte Abstand dₛ₂.

Vorteilhafterweise wird zu diesem Zeitpunkt erneut sichergestellt, dass die Anlagefläche des Stapelrads 2 senkrecht zum Transportband 9 steht. Falls dies nicht der Fall ist, muss entsprechend korrigiert werden.

Nach Ablauf der vorher ermittelten Zeit hat der erste Einzelstapel 4 die Anlagefläche 16 des Stapelrads 8 erreicht. Jetzt wird der erste Einzelstapel 4 mittels des Aushebers 14 ausgehoben und gehalten. Hierdurch wird eine Beeinträchtigung des Einzelstapels 4 durch das ansonsten schleifend unter ihm durchlaufende Transportband 9 verhindert. Sobald ein zweiter aufgerichteter Einzelstapel 4 den Positionssensor P2 erreicht, erfolgt die Ermittlung der Zeit bis dieser Einzelstapel 4 am ersten Einzelstapel 4 zum Anliegen kommt. Der Abstand dₛ₂ ist dabei um die Dicke der bereits anliegenden Einzelstapel 4 reduziert.

Kurz bevor der zweite Einzelstapel 4 auf den Ausheber 14 trifft, wird dieser nach unten bewegt, um auch den zweiten Einzelstapel 4 aufnehmen und anheben zu können. Nach Ablauf der zuvor ermittelten Zeit wird der Ausheber wieder angehoben. Dieser Vorgang wiederholt sich solange bis der vorletzte Einzelstapel 4 vom Ausheber 14 angehoben worden ist.

Sobald der letzte Einzelstapel 4 eines Mehrfachstapels am vorletzten Einzelstapel 4 zum Anliegen kommt, wird das bisher ruhende Stapelrad 8 um 45° gedreht. Hierbei ist die Drehzahl n₂ des Stapelrads 8 so langsam wie möglich zu wählen, um ein Verrutschen des Mehrfachstapels auf dem Stapelrad zu verhindern. Jedoch ist zu beachten, dass der nächstankommende Einzelstapel 4 nicht mit dem Stapelrad 8 kollidiert. Dieser Vorgang wird für jede weitere Mehrfachstapelbildung 15 wiederholt.

Spätestens nach dem Schwenken des zweiten Mehrfachstapels wird bei jedem weiteren Drehen des Stapelrads 8 um 45° ein fertig gebildeter Mehrfachstapel auf das Transportband 9 abgelegt. Die auf dem Transportband 9 weitergeförderten Mehrfachstapel sind die Einzelstücke 10, aus denen im weiteren Verfahren die definierten Gesamtpacken 13 gebildet werden.

Das Stapelrad 8 muss um 45° gedreht sein, bevor der nächste ankommende Einzelstapel 4 den Weg dₛ₂ zurücklegt hat. Abhängig von den unterschiedlichen Stapelabmessungen ist zu prüfen, ob und wie lange anfangs das Stapelrad 8 schneller als mit der durchschnittlichen Drehzahl n_{2durch} gedreht werden muss, um eine Kollision mit dem nächsten ankommenden Einzelstapel 4 zu verhindern.

Im weiteren wir die Funktion des Moduls 2 für die Gesamtpackenbildung beispielhaft erläutert:
Das Band B1 dient der Übernahme des Einzelstücks 10 von der vorgelagerten Stapelung 1 und ihrer Anordnung in einem bestimmten Abstand. Hierfür sind einige Zusammenhänge wesentlich. Je geringer der Abstand der aufeinanderfolgenden Einzelstücke 10 ist, desto niedriger sind sämtliche Geschwindigkeiten der Gesamtpackenbildung und desto mehr Einzelstücke 10 passen auf das Band B1 bzw. desto kürzer kann das Band B1 gestaltet werden. Dies bezieht sich sowohl auf die Band- als auch auf die Längenverstellgeschwindigkeit.

Zu Beginn der Gesamtpackenbildung müssen folgende Parameter bekannt sein bzw. eingestellt werden: die Länge lₛ der Einzelstücke 10, der Soll-Abstand a_{B1} der Einzelstücke 10 auf Band B1 und die Taktrate f_{MS1} der ankommenden Einzelstücke 10.

Die Bandlänge l_{B1} wird abhängig von der vordefinierten Bandlänge l_{B2} eingestellt, die später erläutert wird. Die Bandlänge im Sinne dieser Anmeldung ist die variable Länge der Förderstrecke, auf der ein Einzelstück 10 auf dem jeweiligen Band transportiert wird,

### Zulauf (Band B1)

Mittels der bekannten Parameter l_{S}, a_{B1} und f_{MS1} kann die Geschwindigkeit v_{B1} berechnet und eingestellt werden. Für die abstandsgenaue Übernahme der Einzelstücke 10 auf das Band B1 sind keine weiteren Vorkehrungen zu treffen. Bei konstanter Taktrate f_{MS1} bleibt auch v_{B1} konstant und ist geringer als v_{BS}. Anhand der an dem Positionssensor P3 registrierten Einzelstücke 10 kann zu jeder Zeit die Taktrate f_{MS1} ermittelt und somit v_{B1} angepasst werden. Die Transport-Funktion des Bands B1 selbst erfordert an sich keine Bandlängenverstellung, jedoch die Aneinanderreihung der Einzelstücke 10 durch das Verändern der Förderstrecken. Auf Grund der mechanischen Kopplung des Endes von Band B1 mit dem Anfang von Band B2 wird l_{B1} stets um den gleichen Betrag verstellt wie l_{B2}. Die Summe der Bandlängen l_{B1} und l_{B2} bleibt somit konstant.

### Pufferung (Band B2)

Auf dem Band B2 werden die von dem Band B1 übergebenen Einzelstücke 10 zu einem Pufferstapel 21 ohne Zwischenabstand angeordnet. Aus diesem Pufferstapel 21 wird anschließen ein definierter Gesamtpacken 13 abgetrennt. Durch das Bilden eines Pufferstapels 21 können insbesondere kurzzeitige Schwankungen oder Störungen in einem der vorgelagerten Maschinensegmente oder in der nachgelagerten Verpackungsmaschine ausgeglichen werden.

Vor dem Beginn der Gesamtpackenbildung 12 muss die Länge l_{S} der Einzelstücke 10, sowie die Taktrate f_{MS4} der auf Band B4 an die Verpackungsmaschine abzugebenden Einzelstücke 10 zur Bestimmung von v_{B2} bekannt sein bzw. eingestellt werden. Im Normalfall gilt dabei: f_{MS} = f_{MS1} = f_{MS2}. Die gemeinsame Förderstreckenlänge der Bänder B2 und B3 wird auf einen bestimmten Wert eingestellt, insbesondere auf eine bestimmte Anzahl von Einzelstücken 10 auf den Bändern B2 und B3 oder den anteiligen Wert der Gesamtlänge von Band B1 und den Bändern B2 und B3. Weitere Parameter können insbesondere ein Abstand x_{B2} von Anfang des Pufferstapels 21 zum Positionssensor P4, die Geschwindigkeit v_{IB1/2} des Verstellschlittens 18 in Richtung des Bands B1 beim "Abholen" der Einzelstücke 10 für die Pufferung und die Bandgeschwindigkeit v_{B2} sein, wobei v_{B2} kleiner als v_{B1} ist.

Mittels der bekannten Parameter l_{S} und f_{MS4} wird die Geschwindigkeit v_{B2} berechnet und eingestellt. Sobald ein Einzelstück 10 den Positionssensor 4 erreicht, wird die Förderstrecke des Bands B2 mit v_{IB1/2} in Richtung des Bands B1 solange verlängert, bis das Ende des Einzelstücks 10 den Positionssensor P4 um die Strecke x_{B2} passiert hat. Danach wird die Bandlängenverstellung synchron zur Bandgeschwindigkeit v_{B2} in Richtung Band B2 aktiviert. In diesem Verfahrenschritt ist v_{IB1/2} gleich v_{B2}. Folglich bleibt der Abstand x_{B2} trotz Bewegung des Bandes B2 mit v_{B2} konstant. Der Abstand x_{B2} gewährleistet das vollständige Aufliegen der Oberfläche des Einzelstücks 10 auf dem zweiten Band B2, bevor die synchrone Bandlängenverstellung erfolgt. Er entspricht vorzugsweise dem Radius der Umlenkwalze 20. Erst sobald das nächste auf dem Band B1 transportierte Einzelstück 10 den Positionssensor P4 erreicht, wird die zu v_{B2} synchrone Bewegung der Bandlängenverstellung gestoppt. Es erfolgt unmittelbar wieder eine Bewegung der Bandlängenverstellung in Richtung Band B1 mit v_{IB1/2}, solange bis das Ende auch dieses Einzelstücks 10 den Positionssensor P4 um die Strecke x_{B2} passiert hat. Hierdurch reihen sich die Einzelstücke 10 lückenlos hintereinander auf und bilden den Pufferstapel 21. Darauf folgend wird die Bandlängenverstellung wieder synchron zur Bandgeschwindigkeit v_{B2} in Richtung Band B2 aktiviert, die Geschwindigkeiten v_{IB1/2} und v_{B2} sind wieder gleich.

Für den Fall dass die Frequenzen f_{MS1} und f_{MS4} gleich sind, schwankt die Bandlänge l_{B2} maximal um die Stapellänge l_{S} und der mittels des Pufferstapels 21 gebildete Puffer bleibt insgesamt konstant (=Normalfall). Falls f_{MS1} f_{MS4} übersteigt, wird die Förderstreckenlänge l_{B2} und l_{B3} schrittweise größer und der Puffer wird gefüllt (z. B. bei einer Störungen in der Verpackungsmaschine) Falls Frequenz f_{MS1} geringer als f_{MS4} ist, wird die Förderstreckenlänge l_{B2} und l_{B3} schrittweise kleiner und der Puffer wird geleert (z. B. bei einer Störungen vor dem Band B1).

Die Geschwindigkeit der Bandlängenverstellung v_{IB1/2} in Richtung des Bands B1 ist eine frei voreinzustellende Größe. Mit diesem Wert kann ein Schlupf zwischen dem Band B1 und dem Einzelstück 10 beim Auftreffen auf das vorige Einzelstück 10 beeinflusst werden. Je größer v_{IB1/2} ist, desto geringer ist der Schlupf und die Einzelstücke werden nur entsprechend wenig zusammengedrückt. Je kleiner v_{IB1/2} desto höher der Schlupf und die Einzelstücke werden desto stärker zusammengedrückt. Falls v_{IB1/2} > v_{IB1/2max} entstehen bei der Pufferbildung Lücken zwischen den Einzelstapeln 10.

Die während der Übergabe eines Einzelstücks 10 bestehende Geschwindigkeitsdifferenz zwischen v_{B1} des ersten Bands B1 und v_{IB1/2} des Verstellschlittens 18 dient insbesondere der Verhinderung einer Beeinträchtigung der Oberfläche des Einzelstücks. Die Geschwindigkeitsdifferenz ist vorzugsweise so zu wählen, dass das Anhaften des Einzelstücks 10 an dem Band B1 durch die Trägheit des Einzelstücks 10 beim Passieren der Umlenkwalze 19 überwunden wird.

### Gesamtpackenbildung (Band B3) und Übergabe der Gesamtpacken (Band B4)

Die Gesamtpackenbildung 12 mit angeschlossener Übergabe erfordern ein enges Zusammenspiel des Bands B3 und des Bands B4. Das Band B3 übernimmt die Einzelstücke 10 wie sie von Band B2 ankommen, so dass der Pufferstapel 21 unverändert bestehen bleibt. Mittels unterschiedlicher Bandgeschwindigkeiten v_{B3} und v_{B4} der Bänder B3 und B4 inkl. der Förderlängenverstellung zwischen beiden Bändern werden die Gesamtpackens 13 gebildet. Die Geschwindigkeiten der Bänder B2 und B3 sind dabei während der Übergabe des definierten Gesamtpackens 13 gleich, um ein Auftrennen oder Stauchen des Pufferstapels 21 zu verhindern.

Vor Beginn der Gesamtpackenbildung 12 wird die Förderstreckenlänge l_{B3} auf den Ausgangswert l_{B3(0)} so eingestellt, dass der mögliche Verfahrweg Δl_{B3/4} in Richtung des Bands B3 etwas mehr als die Länge l_{F} des definierten Gesamtpackens 13 beträgt. Das Band B4 läuft mit einer Bandgeschwindigkeit v_{B4} gleich v_{B3}. Die gilt nur für den Fall, wenn kein Gesamtpacken 13 auf dem Band B4 aufliegt, ansonsten hat v_{B4} den Wert null.

Folgende Parameter müssen bekannt sein bzw. eingestellt werden: Die Länge l_{S} der Einzelstücke 10, die Gesamtpackenlänge I_{F}, errechnet aus Anzahl der Einzelstücke 10 pro Gesamtpacken 13 und die Bandgeschwindigkeit v_{B3} = v_{B2}. Wie oben geschildert, sollte während der Gesamtpackenbildung v_{B4} und v_{B3} gleich sein.

Die Bandlänge l_{B3} bleibt solange unverändert auf l_{B3(0)} bis das erste Einzelstück 10 den Positionssensor P5 erreicht. Spätestens zu diesem Zeitpunkt muss ein evtl. auf dem Band B4 vorhandener Gesamtpacken 13 an die nachfolgende Verpackungsmaschine abgegeben sein und die Bandgeschwindigkeit v_{B4}, sollte wieder v_{B3} und v_{B2} entsprechen.

Sobald das erste Einzelstück 10 den Positionssensor P5 erreicht, wird das Band B3 schnellstmöglich mit v_{IB3/4} in Richtung des Bands B3 verlängert, bis rein rechnerisch das Ende des definierten Gesamtpackens 13 den Positionssensor P5 erreicht hat, also der Übergang 24 sich genau auf der Trennstelle zwischen definiertem Gesamtpacken 13 und restlichen Pufferstapel 21 befindet. Hierfür gelten die gleichen Grundsätze wie oben zur Geschwindigkeit v_{IB1/2} dargelegt. Danach wird unmittelbar das Band B4 auf eine Geschwindigkeit v_{B4} beschleunigt, die v_{B3} wesentlich übertrifft. Die Bandlängenverstellung wird mit v_{B4} = v_{IB3/4} = v_{B3} in Richtung des Bands B4 aktiviert, bis l_{B3} wieder den eingestellten Ausgangswert l_{B3(0)} erreicht hat. Die Geschwindigkeit v_{B3} entspricht dabei permanent v_{B2}.

Dadurch wird der definierte Gesamtpacken 13 vom restlichen Pufferstapel 21 getrennt und kann unabhängig von dem Band B3 auf dem Band B4 bewegt werden. Aufgrund der zurücklaufenden Bandlängenverstellung bildet sich ein Abstand zwischen einem in Transportrichtung A vorderen Ende 29 des Pufferstapels 21 und dem Positionssensor P5. Sobald der definierte Gesamtpacken 13 den Positionssensor P6 erreicht wird das Band B4 gestoppt. Erst wenn die nachgeschalteten Verpackungsmaschine zur Übernahme des Gesamtpackens 13 bereit ist, wird der definierte Gesamtpacken 13 übergeben. Hierbei sollte v_{B4} der Transportgeschwindigkeit der Verpackungsmaschine entsprechen, um eine Stauchung oder Streckung der Oberfläche des Gesamtpackens 13 bei der Übergabe zu verhindern.

Diese Übergabe muss spätestens dann abgeschlossen sein, wenn der Pufferstapel 21 wieder den Positionssensor P5 erreicht hat. Falls der definierte Gesamtpacken 13 zu diesem Zeitpunkt noch nicht übergeben ist, müssen die Bänder B3 und B2 gestoppt und der Puffer vergrößert werden.

Je höher die Geschwindigkeiten v_{IB3/4} und v_{B4} gewählt werden, desto mehr Zeit bleibt anschließend für die takt- und raportgenaue Übergabe der definierten Gesamtpacken 13 an die Verpackungsmaschine.

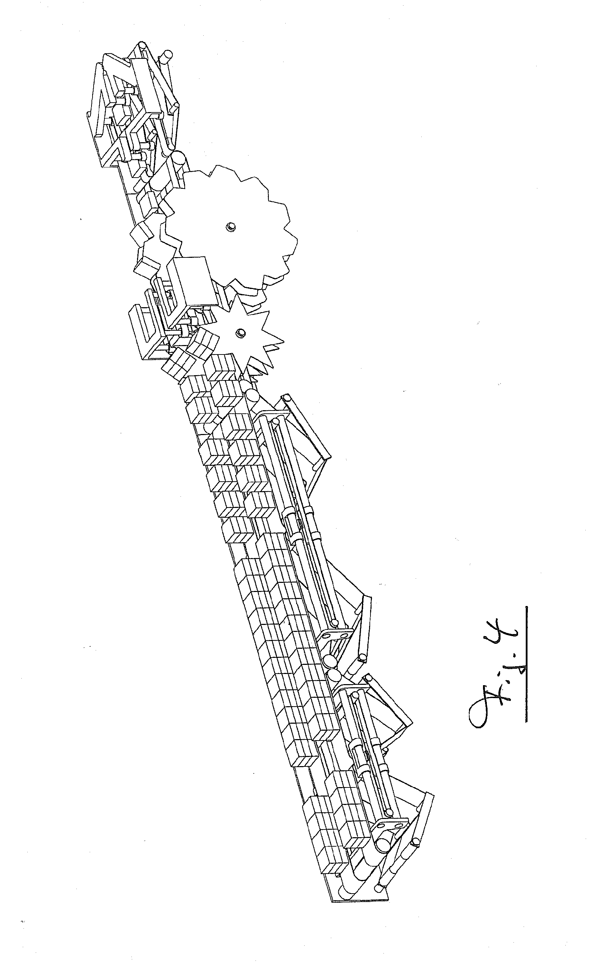

Ein weiterer besonderer Erfindungsgedanke liegt darin, zwei solcher Stapler parallel nebeneinander anzuordnen. Ein solche parallele Führung ist in Figur 4 gezeigt. Mit einer solchen Vorrichtung lassen sich aus festen Produktbreiten im Prinzip beliebige Produktstapel produzieren, wenn die parallelen Stapler unterschiedlich bestückt und gesteuert werden. Zum Schluss werden die Stapel zum entgültigen Produkt zusammen geführt. So ist eine große Variabilität bezüglich der Höhe der Produktstapel gegeben.

## Patentansprüche

1. Verfahren zum Erzeugen formatierter Gesamtpacken (29) enthaltend eine definierte Anzahl aneinanderliegender gleichformatiger insbesondere von einem Lebensmittelprodukt gebildeter Einzelstücke (10), wobei die Einzelstücke (10) auf Förderbändern aufliegend entlang von Förderstrecken transportiert werden,
wobei die Einzelstücke (10) auf einem ersten Förderband (B1) mit gegenseitigem Abstand und mit einer Geschwindigkeit v_{B1} einem eine Pufferstrecke bildenden zweiten Förderband (B2, B3) zugeführt werden, das sich dem ersten Förderband (B1) in Transportrichtung (A) anschließt,
wobei die Einzelstücke (10) am Beginn des zweiten Förderbands (B2, B3) zu einem Pufferstapel (21) aneinanderliegender Einzelstücke (10) aufgestaut werden, wobei der Pufferstapel (21) mit einer Geschwindigkeit v_{B2}, die kleiner als v_{B1} ist, auf dem zweiten Förderband (B2, B3) befördert wird,
wobei am Ende des zweiten Förderbands (B2, B3) Gesamtpacken (29) vermittels eines abführenden Förderbands (B4) vom Pufferstapel (21) separiert werden, dessen Geschwindigkeit v_{B4} während des Separierens vom Pufferstapel (21) größer als v_{B2} ist,
und
wobei sich zwischen den Förderbändern (B1, B2, B3, B4) Übergänge (18, 24) befinden, die beim Aufstauen und/oder Separieren der Einzelstücke (10) relativ zur Transportrichtung (A) verschoben werden.

2. Verfahren nach Anspruch 1,
**dadurch gekennzeichnet,**
**dass** die Übergänge (18, 24) die Förderbänder (B1, B2, B3, B4) abschließende Umlenkrollen (19, 20, 25, 26) aufweisen, die relativ zur Transportrichtung (A) synchron verschoben werden, wobei eine solche Verschiebung die Längen der Förderstrecken der beteiligten Förderbänder verändert.

3. Verfahren nach Anspruch 1 oder 2,
**dadurch gekennzeichnet,**
**dass** die Einzelstücke (10) jeweils Produktstapel eines in Scheiben vorliegenden und auf dem Förderband anhaftenden Lebensmittels, insbesondere unverpackte Schmelzkäsescheiben, sind.

4. Verfahren nach einem der Ansprüche 1 bis 3,
**dadurch gekennzeichnet,**
**dass** die Einzelstücke (10) vor dem Erreichen des ersten Förderbands (B1) vermittels einer Stapeleinheit (1) aus Einzelstapeln (4) zusammengefügt werden.

5. Verfahren nach einem der vorangegangenen Ansprüche,
**dadurch gekennzeichnet,**
**dass** beim Aufstauen der Einzelstücke (10) zu dem Pufferstapel (21) der erste verschiebliche Übergang (18) entgegen der Transportrichtung (A) verschoben wird, bis ein Einzelstück (10) den Übergang passiert hat, dass der erste verschiebliche Übergang (18) nachfolgend in Transportrichtung (A) verschoben wird, bis ein auf dem ersten Förderband (B1) transportiertes Einzelstück (10) den ersten verschieblichen Übergang (18) erreicht, wobei die Verschiebungsgeschwindigkeit (vIB1/2) des ersten verschieblichen Übergangs (18) während der Verschiebung in Transportrichtung (A) gleich der Geschwindigkeit v_{B2}, des Pufferstapels (21) ist.

6. Verfahren nach einem der vorangegangenen Ansprüche,
**dadurch gekennzeichnet,**
**dass** zum Abtrennen eines definierten Gesamtpackens (29) vom Pufferstapel (21) der zweite verschiebliche Übergang (24) entgegen der Transportrichtung (A) verschoben wird, bis der definierte Gesamtpacken den Übergang passiert hat, dass der zweite verschiebliche Übergang (24) nachfolgend in Transportrichtung (A) verschoben wird, sobald der Gesamtpacken (29) definierter Größe den zweiten verschieblichen Übergang (24) passiert hat.

7. Verfahren nach Anspruch 6,
**dadurch gekennzeichnet,**
**dass** der zweite verschiebliche Übergang (24) nach dem Abtrennen eines definierten Gesamtpackens (29) in eine Ausgangsposition verschoben wird.

8. Verfahren nach einem der vorherigen Ansprüche,
**dadurch gekennzeichnet,**
**dass** die Einzelstücke (10) von mehreren Einzelstapeln (4) gebildet werden, wobei liegend ankommende Einzelstapel von einem ersten jeweils einen ankommenden Einzelstapel ergreifenden Stapelrad (5) aufgestellt werden, wobei aufgestellte Einzelstapel (4) zu einem Einzelstück (10) aufgestaut und die Einzelstücke von einem zweiten Stapelrad in liegende Position gedreht werden.

9. Verfahren nach Anspruch 8,
**dadurch gekennzeichnet,**
**dass** die Drehzahl (n1) des ersten Stapelrades (5) mit dem Abstand der auf einem Transportband (9) ankommenden Einzelstapel (4) synchronisiert wird und dass die Drehzahl (n2) der zweiten Stapelscheibe (8) intermittiert.

10. Vorrichtung zum Erzeugen formatierter Gesamtpacken (29) zur Durchführung des Verfahrens nach einem der vorherigen Ansprüche, umfassend ein erstes Förderband (B1) für die Förderung von insbesondere von Lebensmitteln gebildeten Einzelstücken (10) und ein in Transportrichtung nachfolgendes zweites Förderband (B2, B3), wobei zwischen dem ersten (B1) Förderband und zweiten (B2, B3) Förderband ein erster Übergang (18) angeordnet ist,
wobei der erste Übergang (18) relativ zur Transportrichtung (A) verschieblich ist, wobei sich bei einer Verschiebung die Längen der Förderstrecken des ersten (B1) und des zweiten (B2, B3) Förderbandes verändern,
**gekennzeichnet durch**
ein Mittel zur Abtrennung von Gesamtpacken (29), das ein dem zweiten Förderband (B2, B3) in Transportrichtung (A) nachfolgendes drittes Förderband (B4) umfasst, wobei zwischen dem zweiten Förderband (B2, B3) und dem dritten Förderband (B4) ein zweiter verschieblicher Übergang (24) angeordnet ist.

11. Vorrichtung nach Anspruch 10,
**gekennzeichnet durch**
Mittel, die eine Verschiebung des Übergangs entgegen der Transportrichtung (A) bewirken, während ein Einzelstück (10) den Übergang (18) passiert, und die eine Verschiebung mit der Transportrichtung (A) bewirken, bis ein nachfolgendes Einzelstück (10) den Übergang (18) erreicht.

12. Vorrichtung nach einem der Ansprüche 10 oder 11,
**dadurch gekennzeichnet,**
**dass** das zweite Förderband (B2, B3) zwei Bänder umfasst, wobei die zwei Bänder des zweiten Förderbands (B2, B3) mittels eines ortsfesten Übergangs (23) miteinander verbunden sind.

13. Vorrichtung nach einem der Ansprüche 10 bis 12,
**dadurch gekennzeichnet,**
**dass** die Position des Einzelstücks (10) an den verschieblichen Übergängen (18, 24) mittels Sensoren (P4, P5) erfasst wird.

14. Vorrichtung nach einem der Ansprüche 10 bis 13
**dadurch gekennzeichnet,**
**dass** der erste (16) und der zweite (24) Übergang von jeweils einem elektromechanisch verstellbaren Verstellschlitten gebildet werden, der zwei parallel angeordnete, die jeweiligen Förderbänder (B1, B2, B3, B4) abschließende Umlenkrollen (19, 20, 25, 26) koppelt.

## Claims

1. A method for generating formatted total packages (29) comprising a defined number of adjoining equally sized individual pieces (10) formed in particular of a food product, whereby the individual pieces (10) are transported along the conveyor lines laying on conveyor belts,
wherein the individual pieces (10) on a first conveyor belt (B1) are supplied at a mutual distance and at a speed v_{B1} to a second conveyor belt (B2, B3), which forms a buffer line and which adjoins the first conveyor belt (B1) in transport direction (A),
whereby the individual pieces (10) at the beginning of the second conveyor belt (B2, B3) are accumulated to a buffer stack (21) of adjoining individual pieces (10), whereby the buffer stack (21) is transported on the second conveyor belt (B2, B3) at the speed v_{B2} which is lower than v_{B1}, whereby at the end of the second conveyor belt (B2, B3) total packages (29) are separated from the buffer stack (21) by means of a discharging conveyor belt (B4) which, during the process of separating from the buffer stack (21), has a speed v_{B4} that is higher than v_{B2}, and
whereby transitions (18, 24) are located between the conveyor belts (B1, B2, B3, B4) which, during the process of accumulating and/or separating of the individual pieces (10), are displaced in relation to the transport direction (A).

2. A method according to claim 1,
**characterized in that**
the transitions (18, 24) of the conveyor belts (B1, B2, B3, B4) comprise at the end reversing rollers (19, 20, 25, 26) which are synchronously displaced in relation to the transport direction (A), whereby such displacement changes the length of the conveyor lines of the conveyor belts involved.

3. A method according to claim 1 or 2,
**characterized in that**
each individual piece (10) comprises a product stack of a food product, in particular unpackaged slices of processed cheese, which is sliced and attached to the conveyor belt.

4. A method according to claim 1 to 3,
**characterized in that**
prior to reaching the first conveyor belt (B1) the individual pieces (10) are pieced together from individual stacks (4) by means of a stacking unit (1).

5. A method according to any one of the preceding claims,
**characterized in that**
when accumulating the individual pieces (10) to a buffer stack (21) the first displaceable transition (18) is displaced opposite to the transport direction (A) until an individual piece (10) has passed the transition, that the first displaceable transition (18) is subsequently displaced in transport direction (A) until an individual piece (10) transported on the first conveyor belt (B1) has reached the first displaceable transition (18), whereby during the displacement in transport direction (A) the speed of displacement (vIB1/2) of the first displaceable transition (18) equals the speed v_{B2} of the buffer stack (21).

6. A method according to any one of the preceding claims,
**characterized in that**
in order to separate a defined total package (29) from the buffer stack (21) the second displaceable transition (24) is displaced opposite to the transport direction (A) until the defined total package has passed the transition, that the second displaceable transition (24) is subsequently displaced in transport direction (A) as soon as the total package (29) of a defined size has passed the second displaceable transition (24).

7. A method according to claim 6,
**characterized in that**
after a defined total package (29) has been separated the second displaceable transition (24) returns to an initial position.

8. A method according to any one of the preceding claims,
**characterized in that**
the individual pieces (10) are formed by several individual stacks (4), whereby individual stacks arriving in a laying position are raised up by a first stacking wheel (5) which picks up a respective arriving individual stack (4), whereby raised up individual stacks (4) are accumulated to an individual piece (10) and the individual pieces are turned into a laying position by a second stacking wheel.

9. A method according to claim 8,
**characterized in that**
the speed (n1) of the first stacking wheel (5) is synchronized with the distance of the individual stack arriving on a conveyor belt (9) and that the second stacking wheel (8) has an intermittent speed (n2).

10. A device for generating formatted total packages (29) for performing the method according to any one of the preceding claims, which device comprises a first conveyor belt (B1) for conveying individual pieces (10) consisting especially of food products and a subsequent second conveyor belt (B2, B3) in transport direction, whereby a first transition (18) has been arranged between the first (B1) conveyor belt and the second (B2, B3) conveyor belt,
whereby the first transition (18) can be displaced in relation to the transport direction (A), whereby the displacement changes the lengths of the conveyor lines of the first (B1) and the second (B2, B3) conveyor belt,
**characterized by**
a means for separating total packages (29) which comprises a third conveyor belt (B4) following the second conveyor belt (B2, B3) in transport direction (A), whereby a second displaceable transition (24) has been arranged between the second conveyor belt (B2, B3) and the third conveyor belt (B4).

11. A device according to claim 10,
**characterized by**
means which result in a displacement of the transition opposite to the transport direction (A) when an individual piece (10) passes the transition (18), and which result in a displacement in transport direction until a subsequent individual piece (10) reaches the transition (18).

12. A device according to any one of claims 10 or 11,
**characterized in that**
the second conveyor belt (B2, B3) comprises two belts, whereby the two belts of the second conveyor belt (B2, B3) are connected with each other by means of a fixed transition (23).

13. A device according to any one of claims 10 to 12,
**characterized in that**
the position of the individual piece (10) is detected at the different transitions (18, 24) by means of sensors (P4, P5).

14. A device according to any one of claims 11 to 13,
**characterized in that**
the first (16) and the second (24) transition are formed by a respective electromechanically displaceable adjustable slide which connects two reversing rollers (19, 20, 25, 26) which are arranged in parallel and conclude the respective conveyor belts (B1, B2, B3, B4).

## Revendications

1. Procédé destiné à créer des packs complets formatés (29) contenant un nombre défini de pièces (10) individuelles adjacentes de même format, notamment d'un produit alimentaire, les pièces (10) individuelles étant transportées en reposant sur des bandes de convoyage de trajets de convoyage,
les pièces (10) individuelles étant amassées sur une première bande de convoyage (B1) avec un écart mutuel et étant amenées à une vitesse v_{B1} vers une deuxième bande de convoyage (B2, B3) formant un trajet d'accumulation, qui se raccorde à la première bande de convoyage (B1) dans la direction de transport (A),
à la fin de la deuxième bande de convoyage (B2, B3), des paquets complets (29) étant séparés de la pile d'accumulation (21) au moyen d'une bande de convoyage (B4) d'évacuation, dont la vitesse v_{B4} pendant l'opération de séparation de la pile d'accumulation (21) étant supérieure à v_{B2}, et
entre les bandes de convoyage (B1, B2, B3, B4) se trouvant des passages (18, 24), qui lors de l'opération d'accumulation et/ou de séparation des pièces (10) individuelles sont déplacés par rapport au sens de transport (A).

2. Procédé selon la revendication 1
**caractérisé en ce que**
les passages (18, 24) comportent des galets de renvoi (19, 20, 25, 26) fermant les bandes de convoyage (B1, B2, B3, B4), qui par rapport à la direction de transport (A) sont déplacés de manière synchrone, un tel déplacement modifiant les longueurs de trajets de convoyage des bandes de convoyages participantes.

3. Procédé selon la revendication 1 ou la revendication 2,
**caractérisé en ce que**
les pièces (10) sont chacune des piles de produits d'un produit alimentaire se présentant en tranches et adhérant sur la bande de convoyage, notamment des tranches de fromage fondu.

4. Procédé selon l'une quelconque des revendications 1 à 3,
**caractérisé en ce**
**qu'**avant d'atteindre la première bande de convoyage (B1), les pièces (10) individuelles sont assemblées à partir de piles (4) individuelles, au moyen d'une unité d'empilage (1).

5. Procédé selon l'une quelconque des revendications précédentes,
**caractérisé en ce que**
lors de l'amassage des pièces individuelles (10) pour former la pile d'accumulation (21), le premier passage (18) déplaçable est déplacé à l'encontre de la direction de transport (A), jusqu'à ce qu'une pièce (10) individuelle ait traversé le passage, **en ce que** le premier passage (18) déplaçable est déplacé par la suite dans la direction de transport (A), jusqu'à ce qu'une pièce individuelle (10) transportée sur la première bande de convoyage (B1) atteigne le premier passage (18) déplaçable, la vitesse de déplacement (v/B1/2) du premier passage (18) déplaçable pendant le déplacement dans la direction de transport étant identique à la vitesse v_{B2} de la pile d'accumulation (21).

6. Procédé selon l'une quelconque des revendications précédentes,
**caractérisé en ce que**
pour le sectionnement d'un pack complet (29) défini de la pile d'accumulation (21), le deuxième passage (24) déplaçable est déplacé à l'encontre de la direction de transport (A), jusqu'à ce que le paquet complet défini ait traversé le passage, **en ce que** le deuxième passage (24) déplaçable est ensuite déplacé dans la direction de transport (A), dès que le pack complet (29) de taille définie a traversé le deuxième passage (24) déplaçable.

7. Procédé selon la revendication 6,
**caractérisé en ce**
**qu'**après le sectionnement d'un pack complet (29) défini, le deuxième passage (24) déplaçable est déplacé dans une position initiale.

8. Procédé selon l'une quelconque des revendications précédentes,
**caractérisé en ce que**
les pièces (10) individuelles sont formées à partir de plusieurs piles individuelles (4), des piles individuelles qui arrivent en position couchée étant relevées par une première roue d'empilage (5), saisissant chaque fois une pile individuelle qui arrive, des piles individuelles (4) relevées étant amassées en une pièce individuelle (10) et les pièces individuelles étant tournées par une deuxième roue d'empilage en position couchée.

9. Procédé selon la revendication 8,
**caractérisé en ce**
**qu'**on synchronise la vitesse de rotation (n1) de la première roue d'empilage (5) avec l'écart des piles individuelles (4) arrivant sur une bande de convoyage (9) et en ce que la vitesse de rotation (n2) du deuxième disque d'empilage (8) est intermittente.

10. Dispositif destiné à créer des packs complets (29) formatés, destiné à réaliser le procédé selon l'une quelconque des revendications précédentes, comprenant une première bande de convoyage (B1) pour le convoyage de pièces individuelles (10) formée notamment de produits alimentaires et une deuxième bande de convoyage (B2, B3) consécutive dans la direction de transport, entre la première (B1) bande de convoyage et la deuxième (B2, B3) bande de convoyage étant placé un premier passage (18),
le premier passage (18) étant déplaçable par rapport à la direction de transport (A), lors d'un déplacement, les longueurs des trajets de convoyage de la première (B1) et de la deuxième (B2, B3) bandes de convoyage se modifiant,
**caractérisé par**
un moyen pour sectionner des packs complets (29), qui comprend une troisième bande de convoyage (B4) consécutive dans la direction de transport (A),
entre la deuxième bande de convoyage (B2, B3) et la troisième bande de convoyage (B4) étant placé un deuxième passage (24) déplaçable.

11. Dispositif selon la revendication 10,
**caractérisé par**
des moyens qui provoquent un déplacement du passage à l'encontre de la bande de convoyage (A) pendant qu'une pièce individuelle (10) traverse le passage (18) et qui provoquent un déplacement dans la direction de transport (A), jusqu'à ce qu'une pièce individuelle (10) consécutive atteigne le passage (18).

12. Dispositif selon l'une quelconque des revendications 10 ou 11,
**caractérisé en ce que**
la deuxième bande de convoyage (B2, B3) comprend deux bandes, les deux bandes de la deuxième bande de convoyage (B2, B3) étant reliées l'une à l'autre au moyen d'un passage (23) stationnaire.

13. Dispositif selon l'une quelconque des revendications 10 à 12,
**caractérisé en ce que**
la position de la pièce individuelle (10) sur les passages (18, 24) déplaçables est détectée au moyen de capteurs (PA, P5).

14. Dispositif selon l'une quelconque des revendications 10 à 13,
**caractérisé en ce que**
le premier (16) et le deuxième (24) passages sont formés par chaque fois un chariot d'ajustage électromécanique ajustable, qui accouple deux galets de renvoi (19, 20, 25, 26) placés en parallèle, terminant les bandes de transport (B1, B2, B3, B4) respectives.
